# EUROPÄISCHE PATENTSCHRIFT

(11) **EP 3 786 664 B1**
(45) Veröffentlichungstag und Bekanntmachung des Hinweises auf die Patenterteilung: **15.11.2023**
(21) Anmeldenummer: 20177564.0
(22) Anmeldetag: 29.05.2020
(51) Int. Cl.: G01S 7/481, A01D 41/127, G01S 17/42, G01S 17/88, A01B 69/04, G01S 7/40, G01S 7/497, G01S 7/52

(54) **VERFAHREN ZUR SIGNALAUSWERTUNG VON SIGNALEN EINES ENTFERNUNGSMESSERS**
METHOD FOR SIGNAL EVALUATION OF SIGNALS FROM A RANGEFINDER
PROCÉDÉ D'ÉVALUATION DE SIGNAL DES SIGNAUX D'UN TÉLÉMÈTRE

(30) Priorität: 29.08.2019 DE 102019123207
(43) Veröffentlichungstag der Anmeldung: 03.03.2021
(73) Patentinhaber: CLAAS Selbstfahrende Erntemaschinen GmbH, 33428 Harsewinkel (DE)
(72) Erfinder: Middelberg, René, 49080 Osnabrück (DE); Belau, Sven Carsten, 33330 Gütersloh (DE); Irmer, Daniel, 33442 Herzebock-Clarholz (DE); Spiekermann, Sebastian, 48346 Ostbevern (DE)
(74) Vertreter: CLAAS Gruppe

(56) Entgegenhaltungen:
- EP-A1- 3 300 561
- EP-A1- 3 474 034
- EP-A2- 1 302 784
- DE-A1- 4 411 713
- DE-U1-202012 105 044
- US-A1- 2018 284 268
- US-B1- 6 611 227

## Beschreibung

Die vorliegende Erfindung betrifft ein Verfahren zur Signalauswertung von Signalen eines Entfernungsmessers.

Der Entfernungsmesser ist bevorzugt ein Laserentfernungsmesser. Laserentfernungsmesser sind auch als LIDAR-Systeme bekannt. Laserentfernungsmesser messen die Entfernung von Messpunkten zu einem Sensorpunkt des Laserentfernungsmessers. Laserentfernungsmesser, die einen zweidimensionalen oder dreidimensionalen Raum abtasten werden auch als Laserscanner bezeichnet.

Aus der EP3300561A1 ist eine selbstfahrende Erntemaschine mit einem Laserscanner bekannt. Der Laserscanner dient dazu eine Fahrgasse für die selbstfahrende Erntemaschine zu erkennen. DE4411713A1 und EP3474034A1 offenbaren optische Entfernungsmeßvorrichtungen.

Aufgabe der Erfindung ist es die Signalauswertung von Signalen eines Entfernungsmessers zu verbessern.

Erfindungsgemäß dient dazu ein Verfahren gemäß Anspruch 1 zur Signalauswertung von Signalen eines

Entfernungsmessers, insbesondere eines Laser-Entfernungsmessers,
wobei der Entfernungsmessers zumindest einen Sensorpunkt aufweist
wobei der Entfernungsmesser zyklisch Messungen durchführt,
wobei der Entfernungsmesser für jede Messung eine Vielzahl an Messpunkten ausgibt,
wobei jeder Messpunkt eine Entfernung von dem Sensorpunkt angibt,
wobei der Entfernungsmesser Entfernungen in einer Vielzahl von Richtungen misst und jedem Messpunkt ein Horizontalwinkel zugeordnet wird ,
wobei eine Mehrzahl der Messpunkte auf Basis der Entfernung in Nutzsignale und Störsignale unterschieden werden
wobei Messpunkte mit einer Entfernung unterhalb eines ersten Grenzwertes als Störsignale und Messpunkte oberhalb des ersten Grenzwertes als Nutzsignale identifiziert werden,
wobei Nutzsignale einem ersten Messbereich zugeordnet werden, wenn die Nutzsignale eine vorbestimmte Bedingung für Entfernung und Horizontalwinkel erfüllen,
wobei die Anzahl der Nutzsignale im dem ersten Messbereich bestimmt wird und mit einem ersten Schwellwert verglichen wird,
wobei ein Warnsignal ausgegeben wird, wenn die Anzahl der Nutzsignale unter dem ersten Schwellwert liegt.

Die Trennung der Messpunkte in Nutzsignale und Störsignale über die Entfernung ist eine besonders einfache Form der Trennung. Die Trennung über die Entfernung ist besonders nützlich, wenn die Entfernung der zu vermessenden Objekte annähernd bekannt ist. Ein Beispiel ist eine selbstfahrende Landmaschine, wie eine Mähdrescher, ein Feldhäcksler oder ein Traktor, die einen Entfernungsmesser einsetzt um Objekte in Fahrtrichtung zu erkennen. Ist der Entfernungsmesser oben an der Landmaschine angebracht und misst nach vorne unten, so ist davon auszugehen, dass auf den ersten Metern kein Objekt ist, das vermessen werden soll. Die Nutzsignale können einer Anwendung zur weiteren Verarbeitung zugeleitet werden. Dass Warnsignal kann den Nutzer oder die Anwendung darauf hinweisen, dass die Signalqualität beeinträchtigt ist. Darauf kann der Nutzer oder die Anwendung reagieren und ggf. Maßnahmen zur Verbesserung der Signalqualität einleiten. Die Störsignale können bei Bedarf genutzt werden, um geeignete Maßnahmen zur Verbesserung der Signalqualität auszuwählen.

Weiterhin betrifft die Erfindung gemäß Anspruch 19 ein System zur Signalauswertung mit einem Entfernungsmesser und einer Recheneinheit, wobei der Entfernungsmesser mit der Recheneinheit kommunikativ gekoppelt ist, wobei die Recheneinheit dazu vorgesehen und eingerichtet ist ein erfindungsgemäßes Verfahren durchzuführen. Die Signale des Entfernungsmessers werden an die Recheneinheit übertragen und von der Recheneinheit in Nutzsignale und Störsignale unterschieden.

Bevorzugt ist der Entfernungsmesser auf einer selbstfahrenden landwirtschaftlichen Arbeitsmaschine befestigt. Bei der Arbeit einer selbstfahrenden landwirtschaftlichen Arbeitsmaschine auf einem Feld entstehen häufig Staub und Schmutz, welche die Signalqualität des Entfernungsmessers beeinträchtigen. Daher ist der Einsatz eines erfindungsgemäßen Verfahrens hier besonders vorteilhaft.

Der erste Grenzwert ist vorzugsweise kleiner als sechs Meter. Bei der Anbringung des Entfernungsmessers am Dach einer selbstfahrenden landwirtschaftlichen Arbeitsmaschine sind oberhalb von sechs Metern zu vermessende Objekte zu erwarten.

Weiterhin ist der erste Grenzwert vorzugsweise größer als drei Meter. Bei der Anbringung des Entfernungsmessers an einer selbstfahrenden landwirtschaftlichen Arbeitsmaschine sind unterhalb von drei Metern keine zu vermessenden Objekte zu erwarten. Vorzugsweise werden Störsignale in Staubsignale und Schmutzsignale unterschieden, wobei Störsignale mit einer Entfernung unterhalb eines zweiten Grenzwertes als Schmutzsignale und Störsignale oberhalb des zweiten Grenzwertes als Staubsignale identifiziert werden. Die Unterscheidung in Staubsignale und Schmutzsignale über die Entfernung ermöglicht eine Unterscheidung der Ursache der Störsignale. Entfernungsmesser sind typischerweise zum Schutz hinter einer Abdeckung verbaut. Die Abdeckung schützt den Entfernungsmesser vor Beschädigungen. Im Falle eines Laserentfernungsmessers ist die Abdeckung typischerweise eine transparente Scheibe. Entfernungsmesser arbeiten durch Aussendung von Messsignalen und Empfang der reflektierten Messsignale. Aus der Laufzeit der Messsignale wird die Entfernung bestimmt. Schmutzsignale entstehen durch Reflektion der Messsignale an Schmutz, der sich auf der Abdeckung angelagert hat. Staubsignale entstehen durch Reflektion der Messsignale an Staubteilchen, die sich zwischen Abdeckung und zu vermessendem Objekt befinden.

Der zweite Grenzwert ist vorzugsweise größer als die Entfernung zwischen Sensorpunkt und Abdeckung, da das Messsignal nach der Reflektion am Schmutz mehrfach reflektiert werden kann bevor es vom Sensor absorbiert wird. Der zweite Grenzwert ist vorzugsweise größer als dreißig Zentimeter.

Der zweite Grenzwert ist vorzugsweise kleiner als einen Meter. Oberhalb von einem Meter ist davon auszugehen, dass die Signale nicht von einer Reflektion an Schmutz entstanden sind.

Vorzugsweise bleiben Nutzsignale oberhalb eines dritten Grenzwertes bei der Bestimmung der Anzahl der Nutzsignale unbeachtet. Messpunkte mit sehr großen Entfernungen werden typischerweise nicht von den zu vermessenden Objekten direkt reflektiert, sondern entstehen durch Mehrfachreflektion oder ungewöhnliche äußere Bedingungen. Diese Messpunkte werden daher nicht als Nutzsignale betrachtet und bleiben unbeachtet.

Der dritte Grenzwert ist vorzugsweise größer als vierzehn Meter. Unterhalb von vierzehn Metern ist von sinnvollen Nutzsignalen auszugehen.

Der dritte Grenzwert ist vorzugsweise kleiner als zwanzig Meter. Oberhalb von zwanzig Metern ist kein sinnvolles Nutzsignal zu erwarten. Bei der Nutzung von Entfernungsmessern an Landmaschinen ist der Bereich oberhalb von zwanzig Metern typischerweise für die Anwendung in der die Nutzsignale verarbeitet werden nicht relevant.

Vorzugsweise werden die Nutzsignale einer Vielzahl von Messbereichen zugeordnet, wobei die Zuordnung der Nutzsignale zu den Messbereichen den Horizontalwinkel und die Entfernung der Nutzsignale berücksichtigt. Durch die Aufteilung der Nutzsignale in Messbereiche können viele Anwendungen effizienter ausgeführt werden, da die Anwendungen nur die Nutzsignale aus relevanten Messbereichen berücksichtigen müssen. Dadurch wird die Menge der zu verarbeitenden Daten reduziert und die Ausführung der Anwendung effizienter.

Vorzugsweise ist jedem Messpunkt ein Vertikalwinkel zugeordnet, wobei die Zuordnung der Nutzsignale zu den Messbereichen den Vertikalwinkel berücksichtigt. Bei Messpunkten mit unterschiedlichen Vertikalwinkeln können die Messbereiche auch durch den Vertikalwinkel unterschieden werden. Durch die weitere Unterteilung der Messbereiche kann die Ausführung der Anwendung effizienter werden.

Vorzugsweise wird für jedes Nutzsignal eine Position aus Entfernung, Horizontalwinkel und Vertikalwinkel in ein kartesisches Koordinatensystem umgerechnet, wobei die Position im kartesischen Koordinatensystem auf eine Ebene projiziert wird und der erste Messbereich in der Ebene rechteckig ist. Die Position jedes Messpunktes liegt typischerweise als Kombination aus Entfernung, Horizontalwinkel und Vertikalwinkel also in Polarkoordinaten vor. Für einige Anwendungen ist es sinnvoll einen Messbereich als Rechteck in einer Ebene zu definieren. Dazu wird die Projektion der Messpunkte auf die Ebene bestimmt und auf Basis der Projektion bestimmt welchem Messbereich der jeweilige Messpunkt zugeordnet wird.

Vorzugsweise wird für ein erstes Störsignal eine durch Vertikalwinkel, Horizontalwinkel und Sensorpunkt definierte Gerade berechnet und das erste Störsignal dem ersten Messbereich zugeordnet wird, wenn die Gerade die Ebene schneidet. Durch die Zuordnung der Störsignale, deren Gerade die Ebene innerhalb des ersten Messbereichs schneidet, werden die Störsignale dem Messbereich zugeordnet, die die Messung in dem ersten Messbereich stören. Störsignale deren Gerade die Ebene nicht oder außerhalb des ersten Messbereichs schneiden stören die Messung innerhalb des Messbereichs nicht.

Alternativ werden die Störsignale einer Vielzahl von Winkelbereichen zugeordnet, wobei die Zuordnung der Störsignale zu den Winkelbereichen den Horizontalwinkel der Störsignale berücksichtigt. Vorzugsweise berücksichtigt die Zuordnung der Staubsignale zu den Winkelbereichen und/oder die Zuordnung der Schmutzsignale zu den Winkelbereichen den Vertikalwinkel. Vorzugsweise wird jedem Messbereich ein Winkelbereich zugeordnet. Analog zu der Zuordnung der Nutzsignale zu Messbereichen, werden die Störsignale Winkelbereichen zugeordnet. Durch diese Zuordnung wird die Verarbeitung der Störsignale effizienter. Die Winkelbereiche werden dabei vorzugsweise jeweils dem Messbereich zugeordnet, deren Messung die Störsignale im Winkelbereich stören. Die geometrische Form der Messbereiche und der Winkelbereiche kann dabei unterschiedlich sein. Da nicht immer eindeutig ist welche Störsignale welche Messbereiche stören, können die Winkelbereiche auch Störsignale enthalten, die die Messung im zugeordneten Messbereich nicht stören.

Vorzugsweise wird, wenn für eine Messung die Anzahl der Nutzsignale in dem ersten Messbereich unter dem ersten Schwellwert liegt, die Anzahl der Staubsignale und die Anzahl der Schmutzsignale der Messung in dem zugeordneten Winkelbereich verglichen, wobei ein Signal zur Staubabsaugung ausgegeben wird, wenn die Anzahl der Staubsignale höher ist als die Anzahl der Schmutzsignale und ein Signal zur Reinigung ausgegeben wird, wenn die Anzahl der Schmutzsignale höher ist als die Anzahl der Staubsignale. Wenn die Anzahl der Nutzsignale im ersten Messbereich unter den ersten Schwellwert sinkt, sollten Maßnahmen zur Verbesserung der Signalqualität eingeleitet werden. Der Vergleich der Staubsignale mit den Schmutzsignalen gibt an ob die Staubabsaugung oder die Schmutzentfernung die bessere Maßnahme ist und es wird ein entsprechendes Signal ausgegeben.

In einer Ausführungsform wird ein Signal zur Staubabsaugung ausgegeben, wenn die Anzahl der Staubsignale höher ist als ein zweiter Schwellwert. Durch die Ausgabe eines Signals zur Staubabsaugung, wenn die Anzahl der Staubsignale höher ist als ein zweiter Schwellwert, also auch wenn die Anzahl der Nutzsignale in dem ersten Messbereich über dem ersten Schwellwert liegt, kann eine Maßnahme zur Verbesserung der Signalqualität bereits eingeleitet werden, bevor die Signalqualität beeinträchtigt ist.

In einer Ausführungsform wird ein Signal zur Reinigung ausgegeben, wenn die Anzahl der Schmutzsignale höher ist als ein zweiter Schwellwert. Der zweite Schwellwert ist bevorzugt kleiner als ein Drittel der Anzahl der Messpunkte der Messung.

In einer weiteren Ausführungsform wird ein Signal zur Reinigung ausgegeben, wenn die Anzahl der Schmutzsignale höher ist als ein dritter Schwellwert. Der dritte Schwellwert ist bevorzugt kleiner als ein Drittel der Anzahl der Messpunkte der Messung.

In einer weiteren Ausführungsform wird ein Signal zur Staubabsaugung ausgegeben, wenn die Anzahl der Staubsignale in einem Winkelbereich höher ist als ein vierter Schwellwert. Der Winkelbereich ist bevorzugt der dem ersten Messbereich zugeordnete Winkelbereich. Durch die Einschränkung auf den Winkelbereich werden die Staubsignale erfasst, die in einem besonders relevanten Bereich liegen. Die Höhe des vierten Schwellwertes ist bevorzugt abhängig von der Größe des Winkelbereichs. Der vierte Schwellwert ist bevorzugt kleiner als ein Drittel der Anzahl der durch den Winkelbereich ausgesendeten Messsignale.

In einer weiteren Ausführungsform wird ein Signal zur Reinigung ausgegeben wird, wenn die Anzahl der Schmutzsignale in einem Winkelbereich höher ist als ein fünfter Schwellwert. Der Winkelbereich ist bevorzugt der dem ersten Messbereich zugeordnete Winkelbereich. Durch die Einschränkung auf den Winkelbereich werden die Schmutzsignale erfasst, die in einem besonders relevanten Bereich liegen. Die Höhe des fünften Schwellwertes ist bevorzugt abhängig von der Größe des Winkelbereichs. Der fünfte Schwellwert ist bevorzugt kleiner als ein Drittel der Anzahl der durch den Winkelbereich ausgesendeten Messsignale.

In einer bevorzugten Ausführungsform bleiben Schmutzsignale mit einer Entfernung kleiner als ein vierter Grenzwert bei Bestimmung der Anzahl der Schmutzsignale unbeachtet, wobei der vierte Grenzwert vorzugsweise größer als zehn Zentimeter ist. Entfernungsmesser sind häufig gekapselt und die Messsignale verlassen die Kapselung durch eine transparente Scheibe, wobei an der Scheibe einige Messsignale reflektiert werden. Diese Signale entstehen also weder durch Schmutz oder Staub noch durch Reflektion an den zu vermessenden Objekten. Diese Signale werden daher bei der Bestimmung der Anzahl der Schmutzsignale nicht beachtet.

Bevorzugt ist der erste Schwellwert kleiner als die Hälfte der Anzahl der Messpunkte der Messung.

Besonders bevorzugt ist der erste Schwellwert kleiner ist als ein Drittel der Anzahl der Messpunkte der Messung.

Im Folgenden wird die Erfindung anhand von Ausführungsbeispiele darstellenden nicht maßstabsgetreuen Zeichnungen näher erläutert. Dabei zeigt:
Fig. 1 eine selbstfahrende landwirtschaftliche Arbeitsmaschine mit einem Entfernungsmesser in Seitenansicht,
Fig. 2 eine selbstfahrende landwirtschaftliche Arbeitsmaschine mit einem Entfernungsmesser in Draufsicht,
Fig. 3 Messpunkte einer Messung,
Fig. 4 Messpunkte einer Messung,
Fig. 5 Anzahl von Messpunkte im Zeitverlauf
Fig. 6 Anzahl von Messpunkte im Zeitverlauf.

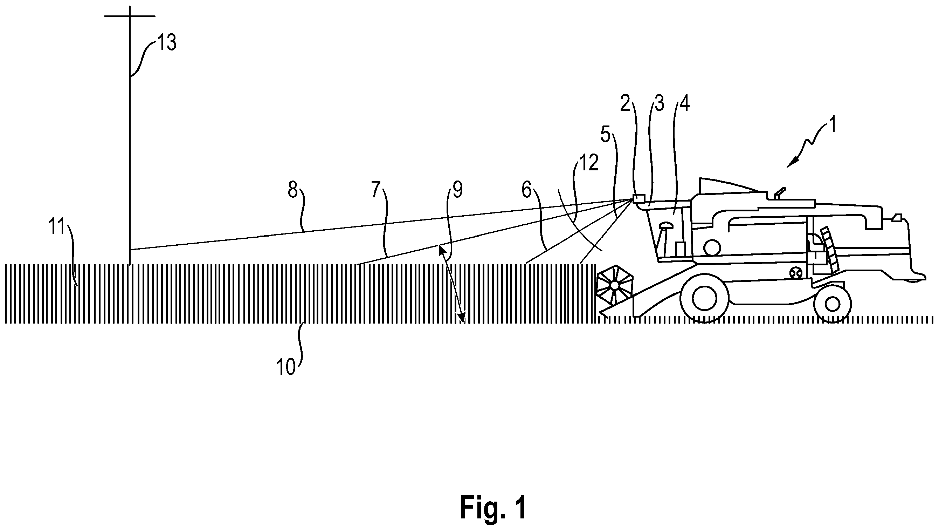

In Fig. 1 ist eine selbstfahrende landwirtschaftliche Arbeitsmaschine 1 mit einem Entfernungsmesser 2 gezeigt. Die landwirtschaftliche Arbeitsmaschine 1 ist in diesem Beispiel ein Mähdrescher und der Entfernungsmesser 2 ist an einem Dach 3 der Fahrerkabine 4 befestigt. Der Entfernungsmesser 2 ist in diesem Beispiel ein LIDAR-System. Der Entfernungsmesser 2 sendet Messsignale 5, 6, 7, 8 mit unterschiedlichem Vertikalwinkel 9 aus. Die Messsignale 5, 6, 7, 8 werden in Richtung des Feldes 10 vor der Arbeitsmaschine 1 ausgesendet. Auf dem Feld 10 wächst Erntegut 11. Messsignale 5, 6, 7, 8 deren Entfernung größer ist als ein erster Grenzwert 12 werden als Nutzsignale identifiziert. Das erste Messsignal 5, das zweite Messsignal 6 und das dritte Messsignal 7 werden vom Erntegut 11 reflektiert. Das vierte Messsignal 8 wird von einem Hindernis 13 reflektiert. Da alle Messsignale 5, 6, 7, 8 von zu vermessenden Objekten reflektiert werden, deren Entfernung größer ist als der erste Grenzwert 12, werden alle aus den Messsignalen entstehenden Messpunkte als Nutzsignale identifiziert. Die Verarbeitung der Messpunkte kann von einer am Sensor verbauten Recheneinheit (nicht dargestellt) erfolgen oder von einer anderen Recheneinheit, die mit dem Sensor kommunikativ gekoppelt ist, wobei der Sensor die Messpunkte an die Recheneinheit übermittelt. Die Arbeitsmaschine 1 ist mit einer Staubabsaugvorrichtung (nicht dargestellt) ausgestattet. Mit der Staubabsaugvorrichtung kann insbesondere die Staubmenge vor dem Entfernungsmesser 2 reduziert werden. Weiterhin ist die Arbeitsmaschine 1 mit einer Reinigungsanlage (nicht dargestellt) ausgestattet. Mit der Reinigungsanlage kann insbesondere eine Abdeckung des Entfernungsmessers 2 von Schmutz befreit werden.

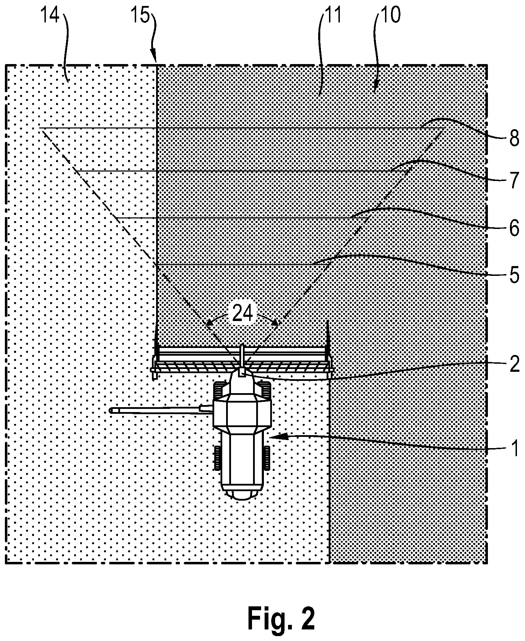

In Fig. 2 ist eine selbstfahrende landwirtschaftliche Arbeitsmaschine 1 mit einem Entfernungsmesser 2 gezeigt. Der Entfernungsmesser 2 sendet Messsignale 5, 6, 7, 8 mit unterschiedlichem Vertikalwinkel (nicht dargestellt) aus. Durch die unterschiedlichen Vertikalwinkel treffen die Messsignale 5, 6, 7, 8 in unterschiedlicher Entfernung vor der Arbeitsmaschine 1 auf das Feld 10 auf. Bei einer Messung wird jedes Messsignal mehrfach mit unterschiedlichem Horizontalwinkel 24 ausgesendet. Ein Teil der Messsignale 5, 6, 7, 8 wird vom Erntegut 11 reflektiert und ein Teil der Messsignale 5, 6, 7, 8 wird vom bereits abgeernteten Stoppelfeld 14 Reflektiert. Aus den unterschiedlichen Reflektionen kann die Bestandskannte 15 erkannt werden. Die erkannte Bestandskante 15 kann bspw. von einer Lenkungssteuerung genutzt werden, um die Arbeitsmaschine 1 entlang der Bestandskante 15 zu fahren. Dabei kann die Lenkungssteuerung auf derselben Recheneinheit laufen auf der die Messpunkte ausgewertet werden oder auf einer anderen.

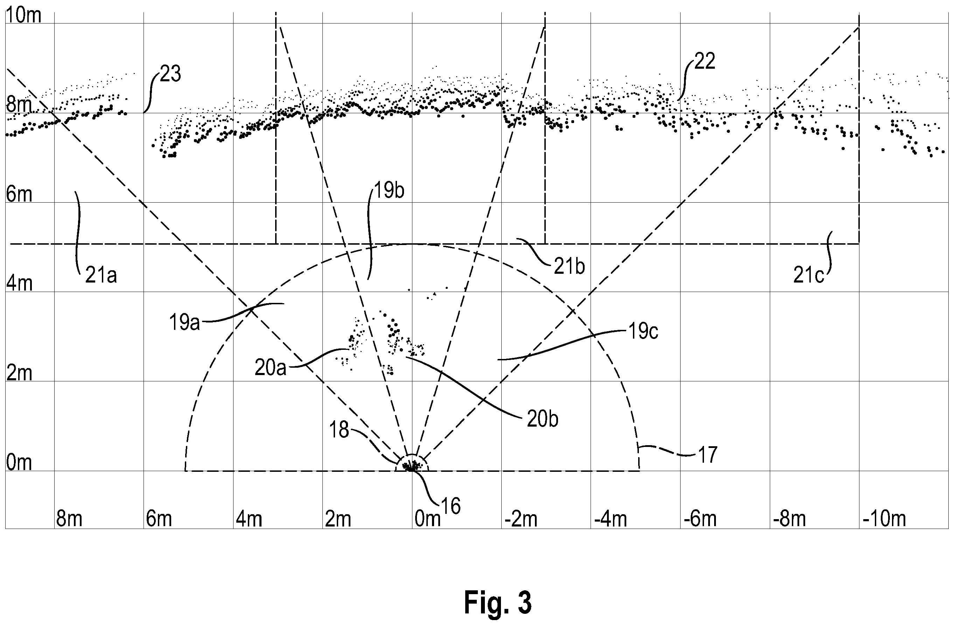

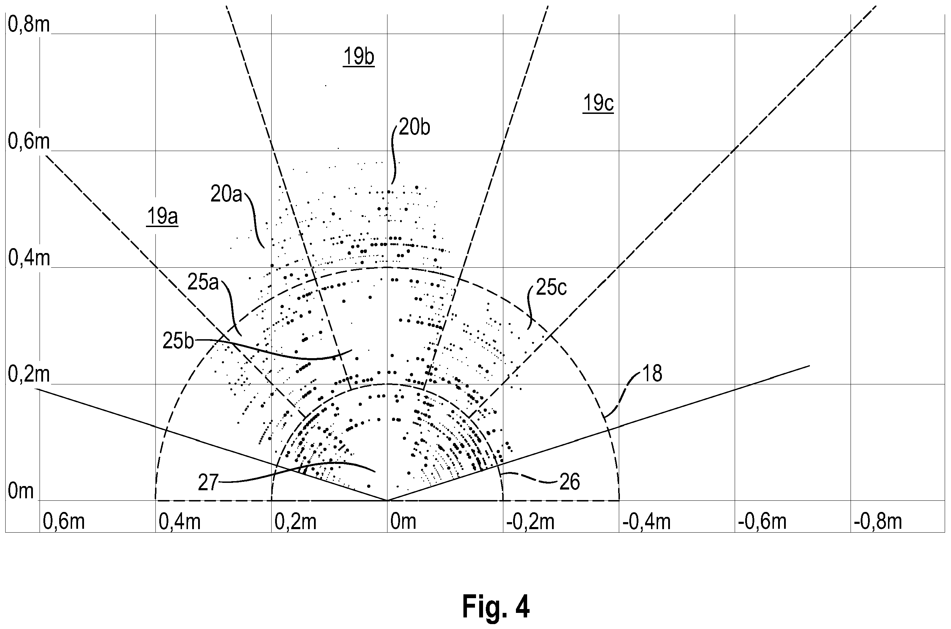

In Fig. 3 sind die Messpunkte einer Messung gezeigt. Ausgehend von einem Sensorpunkt 16 wird die Entfernung der Messpunkte und ihr Horizontalwinkel gezeigt. Messpunkte unterhalb des ersten Grenzwertes 17 werden als Störsignale identifiziert. Der erste Grenzwert 17 beträgt in diesem Beispiel fünf Meter. Die Störsignale werden anhand eines zweiten Grenzwertes 18 in Staubsignale und Schmutzsignale unterschieden. Der zweite Grenzwert 18 beträgt in diesem Beispiel vierzig Zentimeter. Die Störsignale werden in diesem Beispiel drei Winkelbereichen 19a, 19b, 19c zugeordnet. Im ersten Winkelbereich 19a sind einige Staubsignale 20a zu erkennen. Im zweiten Winkelberiech 19b sind viele Staubsignale 20b zu erkennen. Im dritten Winkelbereich 19c sind keine Staubsignale zu erkennen. Der Bereich der Schmutzsignale ist in dieser Darstellung sehr klein und wird in Fig.4 näher erläutert.

Die Messpunkte mit Entfernungen oberhalb des ersten Grenzwertes 17 werden als Nutzsignale 22 identifiziert. Die Nutzsignale werden in diesem Beispiel drei Messbereichen 21a, 21b, 21c zugeordnet. Die Messbereiche 21a, 21b, 21c sind in diesem Beispiel rechteckig in einem kartesischen Koordinatensystem. Die Nutzsignale 22 sind jeweils durch Entfernung, Horizontalwinkel 24 und Vertikalwinkel 9 gekennzeichnet. Für die Zuordnung zu einem Messbereich 21a, 21b, 21c wird jedes Nutzsignal 22 auf eine Ebene projiziert und bestimmt in welchen Messbereich 21a, 21b, 21c die Projektion fällt. In allen drei Messbereichen 21a, 21b, 21c sind in diesem Beispiel genügend Nutzsignale 22 zu erkennen. Im ersten Messbereich 21a ist eine Messlücke 23 in den Nutzsignalen 22 zu erkennen. An der Messlücke 23 ist die Bestandskante 15 zu erkennen.

In Fig. 4 sind die Messpunkte einer Messung mit geringen Entfernungen gezeigt. Im ersten Winkelbereich 19a sind einige Staubsignale 20a mit Entfernungen größer als der zweite Grenzwert 18 und viele Schmutzsignale 25a mit Entfernungen kleiner als der zweite Grenzwert 18 gezeigt. Im zweiten Winkelbereich 19b sind viele Staubsignale 20b und einige Schmutzsignale 25b gezeigt. Im dritten Winkelbereich 19c sind keine Staubsignale und viele Schmutzsignale 25c gezeigt. Unterhalb eines dritten Grenzwertes 26 sind Messpunkte mit sehr kleinen Entfernungen 27 gezeigt. Diese Messpunkte 27 entstehen durch Reflektion der Messstrahlen am Gehäuse des Entfernungsmessers. Da diese Messpunkte immer auftreten, auch wenn kein Schmutz am Gehäuse haftet, werden diese Messpunkte bei der Bestimmung der Anzahl der Schmutzsignale nicht beachtet.

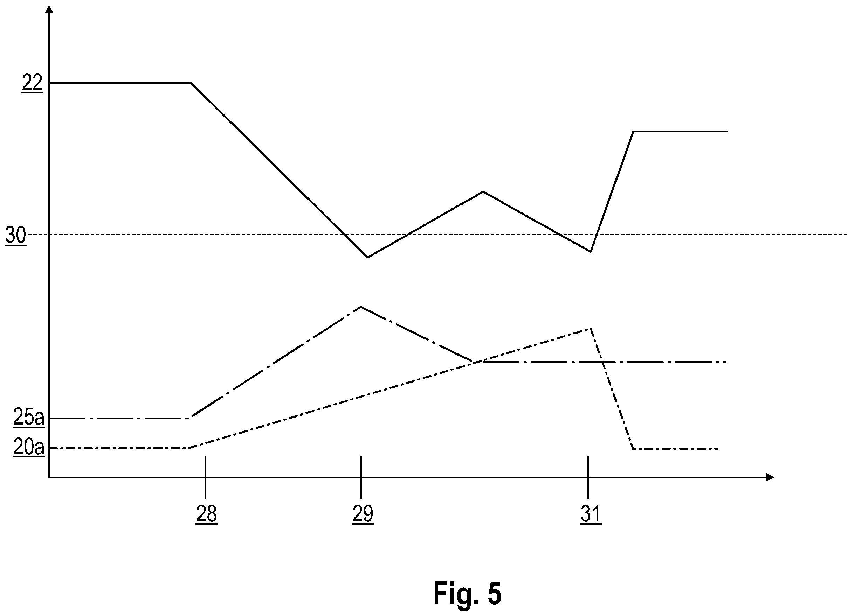

In Fig. 5 ist Anzahl von Messpunkte im ersten Messbereich 21a und im ersten Winkelbereich 20a im Zeitverlauf gezeigt. Die Messpunkte werden dabei in Nutzsignale 22, Staubsignale 20a und Schmutzsignale 25a unterschieden. Zu Beginn des Zeitverlaufs bei einem ersten Zeitpunkt 28 ist der Entfernungsmesser sauber und die Anzahl der Schmutzsignale 25a gering. Die Staubbelastung und die Anzahl der Staubsignale 20a ist ebenfalls gering. Die Anzahl der Nutzsignale 22 ist hoch. Im Zeitverlauf steigt die Staubbelastung und die Anzahl der Staubsignale 20a nimmt zu und die Anzahl der Nutzsignale 22 nimmt ab. Zu einem zweiten Zeitpunkt 29 sinkt die Anzahl der Nutzsignale 22 unter einen ersten Schwellwert 30. Daraufhin wird ein Warnsignal ausgegeben und die Anzahl der Staubsignale 20a mit der Anzahl der Schmutzsignale 25a verglichen. Da die Anzahl der Staubsignale 20a größer ist als die Anzahl der Schmutzsignale 25a wird ein Signal zur Staubabsaugung ausgegeben. Das Signal zur Staubabsaugung aktiviert eine Staubabsaugvorrichtung. Durch die Staubabsaugung sinkt die Anzahl der Staubsignale 20a und die Anzahl der Nutzsignale 22 steigt. Ein Teil des Staubes setzt sich im Zeitverlauf als Schmutz vor dem Entfernungsmesser ab die Anzahl der Schmutzsignale 25a steigt und die Anzahl der Nutzsignale 22 sinkt. Zu einem dritten Zeitpunkt 31 sinkt die Anzahl der Nutzsignale 22 unter den ersten Schwellwert 30. Daraufhin wird ein Warnsignal ausgegeben und die Anzahl der Staubsignale 20a mit der Anzahl der Schmutzsignale 25a verglichen. Da die Anzahl der Schmutzsignale 25a größer ist als die Anzahl der Staubsignale 20a wird ein Signal zur Reinigung ausgegeben. Das Signal zur Reinigung aktiviert eine Reinigungsanlage. Durch die Reinigung sinkt die Anzahl der Schmutzsignale 20a und die Anzahl der Nutzsignale 22 steigt.

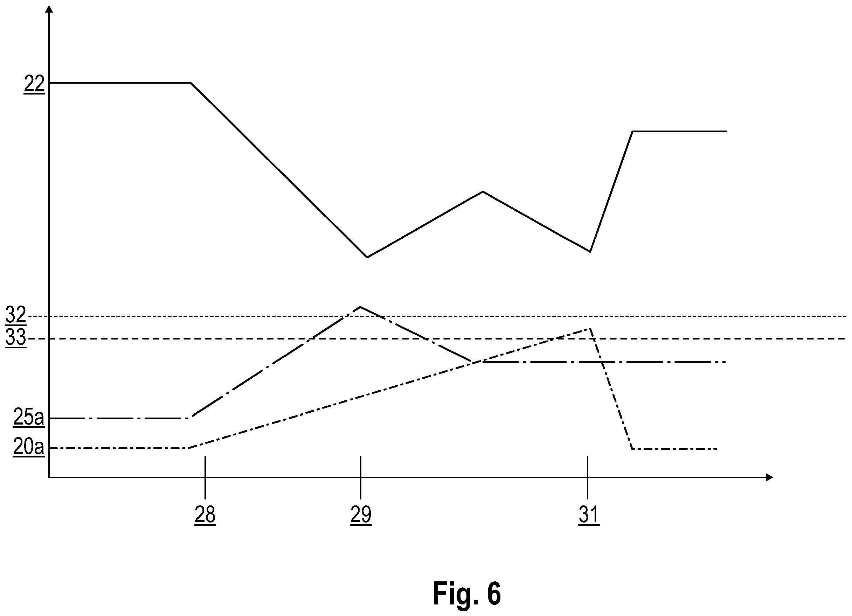

In Fig. 6 ist Anzahl von Messpunkte im ersten Messbereich 21a und im ersten Winkelbereich 20a im Zeitverlauf gezeigt. Die Messpunkte werden dabei in Nutzsignale 22, Staubsignale 20a und Schmutzsignale 25a unterschieden. Zu Beginn des Zeitverlaufs bei einem ersten Zeitpunkt 28 ist der Entfernungsmesser sauber und die Anzahl der Schmutzsignale 25a gering. Die Staubbelastung und die Anzahl der Staubsignale 20a ist ebenfalls gering. Die Anzahl der Nutzsignale 22 ist hoch. Im Zeitverlauf steigt die Staubbelastung und die Anzahl der Staubsignale 20a nimmt zu und die Anzahl der Nutzsignale 22 nimmt ab. Zu einem zweiten Zeitpunkt 29 steigt die Anzahl der Staubsignale 20a über einen zweiten Schwellwert 32. Daraufhin wird ein Signal zur Staubabsaugung ausgegeben. Das Signal zur Staubabsaugung aktiviert eine Staubabsaugvorrichtung. Durch die Staubabsaugung sinkt die Anzahl der Staubsignale 20a und die Anzahl der Nutzsignale 22 steigt. Ein Teil des Staubes setzt sich im Zeitverlauf als Schmutz vor dem Entfernungsmesser ab die Anzahl der Schmutzsignale 25a steigt und die Anzahl der Nutzsignale 22 sinkt. Zu einem dritten Zeitpunkt 31 steigt die Anzahl der Schmutzsignale 25a über einen dritten Schwellwert 33. Daraufhin wird ein Signal zur Reinigung ausgegeben. Das Signal zur Reinigung aktiviert eine Reinigungsanlage. Durch die Reinigung sinkt die Anzahl der Schmutzsignale 20a und die Anzahl der Nutzsignale 22 steigt.

Die Anzahl der Staubsignale und der Schmutzsignale kann auch über alle Winkelbereiche, statt nur für den ersten Messbereich bestimmt werden. In dem Fall wird das Signal zur Staubabsaugung ausgegeben, wenn die Anzahl aller Staubsignale 20a, 20b über einen vierten Schwellwert 32 steigt. Analog wird das Signal zur Reinigung ausgegeben, wenn die Anzahl aller Schmutzsignale 25a, 25b, 25c über einen fünften Grenzwert steigt. Der zeitliche Ablauf ist analog zu dem in Figur 6 gezeigten Ablauf, mit dem Unterscheid, dass statt der Störsignale des ersten Winkelbereichs alle Störsignale berücksichtigt werden und die Schwellwerte angepasst werden.

### Bezugszeichenliste

| | | | |
|---|---|---|---|
| 1 | Arbeitsmaschine | 25a | Schmutzsignale |
| 2 | Entfernungsmesser | 25b | Schmutzsignale |
| 3 | Dach | 25c | Schmutzsignale |
| 4 | Fahrerkabine | 26 | Vierter Grenzwert |
| 5 | Erstes Messsignal | 27 | Messpunkte mit sehr kleiner Entfernung |
| 6 | Zweites Messsignal | 28 | Erster Zeitpunkt |
| 7 | Drittes Messsignal | 29 | Zweiter Zeitpunkt |
| 8 | Viertes Messsignal | 30 | Erster Schwellwert |
| 9 | Vertikalwinkel | 31 | Dritter Zeitpunkt |
| 10 | Feld | 32 | Zweiter/vierter Schwellwert |
| 11 | Erntegut | 33 | Dritter/fünfter Schwellwert |
| 12 | Erster Grenzwert | | |
| 13 | Hindernis | | |
| 14 | Stoppelfeld | | |
| 15 | Bestandskante | | |
| 16 | Sensorpunkt | | |
| 17 | Erster Grenzwert | | |
| 18 | Zweiter Grenzwert | | |
| 19a | Erster Winkelbereich | | |
| 19b | Zweiter Winkelbereich | | |
| 19c | Dritter Winkelbereich | | |
| 20a | Staubsignale | | |
| 20b | Staubsignale | | |
| 21a | Erster Messbereich | | |
| 21b | Zweiter Messbereich | | |
| 21c | Dritter Messbereich | | |
| 22 | Nutzsignale | | |
| 23 | Messlücke | | |
| 24 | Horizontalwinkel | | |

## Patentansprüche

1. Verfahren zur Signalauswertung von Signalen eines Entfernungsmessers (2), insbesondere eines Laser-Entfernungsmessers,
wobei der Entfernungsmessers (2) zumindest einen Sensorpunkt (16) aufweist
wobei der Entfernungsmesser (2) zyklisch Messungen durchführt,
wobei der Entfernungsmesser (2) für jede Messung eine Vielzahl an Messpunkten (20a, 20b, 22, 25a, 25b, 25c) ausgibt, wobei jeder Messpunkt eine Entfernung von dem Sensorpunkt (16) angibt,
wobei der Entfernungsmesser (2) Entfernungen in einer Vielzahl von Richtungen misst und jedem Messpunkt (20a, 20b, 22, 25a, 25b, 25c) ein Horizontalwinkel (24) zugeordnet wird,
wobei eine Mehrzahl der Messpunkte (20a, 20b, 22, 25a, 25b, 25c) auf Basis der Entfernung in Nutzsignale (22) und Störsignale (20a, 20b, 25a, 25b, 25c) unterschieden werden,
wobei Messpunkte mit einer Entfernung unterhalb eines ersten Grenzwertes (12) als Störsignale (20a, 20b, 25a, 25b, 25c) und Messpunkte oberhalb des ersten Grenzwertes als Nutzsignale (22) identifiziert werden,
wobei Nutzsignale (22) einem ersten Messbereich (21a) zugeordnet werden, wenn die Nutzsignale (22) eine vorbestimmte Bedingung für Entfernung und Horizontalwinkel (24) erfüllen,
wobei die Anzahl der Nutzsignale (22) im dem ersten Messbereich (21a) bestimmt wird und mit einem ersten Schwellwert (30) verglichen wird,
wobei ein Warnsignal ausgegeben wird, wenn die Anzahl der Nutzsignale (22) unter dem ersten Schwellwert (30) liegt.

2. Verfahren nach Anspruch 1, **dadurch gekennzeichnet, dass** Störsignale in Staubsignale (20a, 20b) und Schmutzsignale (25a, 25b, 25c) unterschieden werden, wobei Störsignale (20a, 20b, 25a, 25b, 25c) mit einer Entfernung unterhalb eines zweiten Grenzwertes (18) als Schmutzsignale (25a, 25b, 25c) und Störsignale oberhalb des zweiten Grenzwertes als Staubsignale (20a, 20b) identifiziert werden.

3. Verfahren nach einem der vorhergehenden Ansprüche, **dadurch gekennzeichnet, dass** Nutzsignale (22) oberhalb eines dritten Grenzwertes bei der Bestimmung der Anzahl der Nutzsignale (22) unbeachtet bleiben.

4. Verfahren nach einem der vorhergehenden Ansprüche, **dadurch gekennzeichnet, dass** die Nutzsignale (22) einer Vielzahl von Messbereichen (21a, 21b, 21c) zugeordnet werden, wobei die Zuordnung der Nutzsignale (22) zu den Messbereichen (21a, 21b, 21c) den Horizontalwinkel (24) und die Entfernung der Nutzsignale (22) berücksichtigt.

5. Verfahren nach Anspruch 4, **dadurch gekennzeichnet, dass** jedem Messpunkt (20a, 20b, 22, 25a, 25b, 25c) ein Vertikalwinkel (9) zugeordnet ist, wobei die Zuordnung der Nutzsignale (22) zu den Messbereichen (21a, 21b, 21c) den Vertikalwinkel (9) berücksichtigt.

6. Verfahren nach Anspruch 5 **dadurch gekennzeichnet, dass** für jedes Nutzsignal (22) eine Position aus Entfernung, Horizontalwinkel (24) und Vertikalwinkel (9) in ein kartesisches Koordinatensystem umgerechnet wird, wobei die Position im kartesischen Koordinatensystem auf eine Ebene projiziert wird und der erste Messbereich (21a) in der Ebene rechteckig ist.

7. Verfahren nach Anspruch 6 **dadurch gekennzeichnet, dass** für ein erstes Störsignal eine durch Vertikalwinkel (9), Horizontalwinkel (24) und Sensorpunkt (16) definierte Gerade berechnet wird und das erste Störsignal (20a, 20b, 25a, 25b, 25c) dem ersten Messbereich (21a) zugeordnet wird, wenn die Gerade die Ebene innerhalb des ersten Messbereichs (21a) schneidet.

8. Verfahren nach einem der Ansprüche 4 bis 6, **dadurch gekennzeichnet, dass** die Störsignale (20a, 20b, 25a, 25b, 25c) einer Vielzahl von Winkelbereichen (19a, 19b, 19c) zugeordnet werden, wobei die Zuordnung der Störsignale (20a, 20b, 25a, 25b, 25c) zu den Winkelbereichen (19a, 19b, 19c) den Horizontalwinkel (24) der Störsignale (20a, 20b, 25a, 25b, 25c) berücksichtigt.

9. Verfahren nach den Ansprüchen 2 und 8, **dadurch gekennzeichnet, dass** die Zuordnung der Staubsignale (20a, 20b) zu den Winkelbereichen (19a, 19b, 19c) und/oder die Zuordnung der Schmutzsignale (25a, 25b, 25c) zu den Winkelbereichen (19a, 19b, 19c) den Vertikalwinkel (9) berücksichtigt.

10. Verfahren nach einem der Ansprüche 8 und 9, **dadurch gekennzeichnet, dass** jedem Messbereich (21a, 21b, 21c) ein Winkelbereich (19a, 19b, 19c) zugeordnet wird.

11. Verfahren nach den Ansprüchen 2 und 7 oder den Ansprüchen 2 und 10, **dadurch gekennzeichnet, dass** wenn für eine Messung die Anzahl der Nutzsignale (22) in dem ersten Messbereich (21a) unter dem ersten Schwellwert (30) liegt, die Anzahl der Staubsignale (20a) und die Anzahl der Schmutzsignale (25a) der Messung in dem zugeordneten Winkelbereich (19a) verglichen werden, wobei ein Signal zur Staubabsaugung ausgegeben wird, wenn die Anzahl der Staubsignale (20a) höher ist als die Anzahl der Schmutzsignale (25a) und ein Signal zur Reinigung ausgegeben wird, wenn die Anzahl der Schmutzsignale (25a) höher ist als die Anzahl der Staubsignale (20a).

12. Verfahren nach Anspruch 2 und einem der Ansprüche 1 bis 10, **dadurch gekennzeichnet, dass** ein Signal zur Staubabsaugung ausgegeben wird, wenn die Anzahl der Staubsignale (20a, 20b) höher ist als ein zweiter Schwellwert (32).

13. Verfahren nach Anspruch 2 und einem der Ansprüche 1 bis 10 oder Anspruch 2 und Anspruch 12, **dadurch gekennzeichnet, dass** ein Signal zur Reinigung ausgegeben wird, wenn die Anzahl der Schmutzsignale (25a, 25b, 25c) höher ist als ein dritter Schwellwert (33).

14. Verfahren nach Anspruch 2 und einem der Ansprüche 8 bis 10, **dadurch gekennzeichnet, dass** ein Signal zur Staubabsaugung ausgegeben wird, wenn die Anzahl der Staubsignale (20a, 20b) in einem Winkelbereich höher ist als ein vierter Schwellwert (32).

15. Verfahren nach Anspruch 2 und einem der Ansprüche 8 bis 10 oder Anspruch 2 und Anspruch 14, **dadurch gekennzeichnet, dass** ein Signal zur Reinigung ausgegeben wird, wenn die Anzahl der Schmutzsignale (25a, 25b, 25c) in einem Winkelbereich höher ist als ein fünfter Schwellwert (33).

16. Verfahren nach Anspruch 9 oder Anspruch 11 oder Anspruch 15, **dadurch gekennzeichnet, dass** Schmutzsignale (25a, 25b, 25c) mit einer Entfernung kleiner als ein vierter Grenzwert (26) bei Bestimmung der Anzahl der Schmutzsignale (25a, 25b, 25c) unbeachtet bleiben, wobei der vierte Grenzwert (26) vorzugsweise größer als zehn Zentimeter ist.

17. Verfahren nach einem der vorhergehenden Ansprüche, **dadurch gekennzeichnet, dass** der erste Schwellwert (30) kleiner ist als die Hälfte der Anzahl der Messpunkte der Messung.

18. Verfahren nach einem der vorhergehenden Ansprüche, **dadurch gekennzeichnet**, der erste Schwellwert (30) kleiner ist als ein Drittel der Anzahl der Messpunkte der Messung.

19. System zur Signalauswertung mit einem Entfernungsmesser (2) und einer Recheneinheit, wobei der Entfernungsmesser (2) mit der Recheneinheit kommunikativ gekoppelt ist, wobei die Recheneinheit dazu vorgesehen und eingerichtet ist ein Verfahren nach einem der vorhergehenden Ansprüche durchzuführen.

20. System nach Anspruch 19, **dadurch gekennzeichnet, dass** der Entfernungsmesser (2) auf einer selbstfahrenden landwirtschaftlichen Arbeitsmaschine (1) befestigt ist.

## Claims

1. A method for the analysis of signals from a range finder (2), particularly from a laser range finder,
wherein the range finder (2) has at least one sensor point (16),
wherein the range finder (2) carries out measurements cyclically,
wherein for each measurement, the range finder (2) outputs a plurality of measuring points (20a, 20b, 22, 25a, 25b, 25c),
wherein each measuring point indicates a distance from the sensor point (16),
wherein the range finder (2) measures distances in a plurality of directions and a horizontal angle (24) is associated with each measuring point (20a, 20b, 22, 25a, 25b, 25c),
wherein a plurality of the measuring points (20a, 20b, 22, 25a, 25b, 25c) are differentiated into meaningful signals (22) and interfering signals (20a, 20b, 25a, 25b, 25c) on the basis of the distance,
wherein measuring points with a distance below a first limiting value (12) are identified as interfering signals (20a, 20b, 25a, 25b, 25c), and measuring points above the first limiting value are identified as meaningful signals (22),
wherein meaningful signals (22) are associated with a first measurement area (21a) when the meaningful signals (22) satisfy a predetermined condition for distance and horizontal angle (24),
wherein the number of meaningful signals (22) in the first measurement area (21a) is determined and compared with a first threshold value (30),
wherein a warning signal is emitted when the number of meaningful signals (22) lies below the first threshold value (30).

2. The method according to claim 1, **characterized in that** the interfering signals are differentiated into dust signals (20a, 20b) and debris signals (25a, 25b, 25c), wherein interfering signals (20a, 20b, 25a, 25b, 25c) with a distance below a second limiting value (18) are identified as debris signals (25a, 25b, 25c), and interfering signals above the second limiting value are identified as dust signals (20a, 20b).

3. The method according to one of the preceding claims, **characterized in that** meaningful signals (22) above a third limiting value are disregarded when determining the number of meaningful signals (22).

4. The method according to one of the preceding claims, **characterized in that** the meaningful signals (22) are associated with a plurality of measurement areas (21a, 21b, 21c), wherein the association of the meaningful signals (22) with the measurement areas (21a, 21b, 21c) takes into consideration the horizontal angle (24) and the distance of the meaningful signals (22).

5. The method according to claim 4, **characterized in that** a vertical angle (9) is associated with each measuring point (20a, 20b, 22, 25a, 25b, 25c), wherein the association of the meaningful signals (22) with the measurement areas (21a, 21b, 21c) takes the vertical angle (9) into consideration.

6. The method according to claim 5, **characterized in that** a position produced from distance, horizontal angle (24) and vertical angle (9) is converted into a Cartesian coordinate system for each meaningful signal (22), wherein the position in the Cartesian coordinate system is projected onto a plane and the first measurement area (21a) in the plane is rectangular.

7. The method according to claim 6, **characterized in that** a straight line defined by vertical angle (9), horizontal angle (24) and sensor point (16) is calculated for a first interfering signal and the first interfering signal (20a, 20b, 25a, 25b, 25c) is associated with the first measurement area (21a) when the straight line intersects the plane within the first measurement area (21a).

8. The method according to one of claims 4 to 6, **characterized in that** the interfering signals (20a, 20b, 25a, 25b, 25c) are associated with a plurality of angular areas (19a, 19b, 19c), wherein the association of the interfering signals (20a, 20b, 25a, 25b, 25c) with the angular areas (19a, 19b, 19c) takes into consideration the horizontal angle (24) of the interfering signals (20a, 20b, 25a, 25b, 25c).

9. The method according to claims 2 and 8, **characterized in that** the association of the dust signals (20a, 20b) with the angular areas (19a, 19b, 19c) and/or the association of the debris signals (25a, 25b, 25c) with the angular areas (19a, 19b, 19c) takes the vertical angle (9) into consideration.

10. The method according to one of claims 8 and 9, **characterized in that** an angular area (19a, 19b, 19c) is associated with each measurement area (21a, 21b, 21c).

11. The method according to claims 2 and 7 or claims 2 and 10, **characterized in that** when the number of meaningful signals (22) in the first measurement area (21a) for a measurement lies below the first threshold value (30), the number of dust signals (20a) and the number of debris signals (25a) of the measurement in the associated angular area (19a) are compared, wherein a signal for dust extraction is emitted when the number of dust signals (20a) is higher than the number of debris signals (25a), and a signal for cleaning is emitted when the number of debris signals (25a) is higher than the number of dust signals (20a).

12. The method according to claim 2 and one of claims 1 to 10, **characterized in that** a signal for dust extraction is emitted when the number of dust signals (20a, 20b) is higher than a second threshold value (32).

13. The method according to claim 2 and one of claims 1 to 10 or claim 2 and claim 12, **characterized in that** a signal for cleaning is emitted when the number of debris signals (25a, 25b, 25c) is higher than a third threshold value (33).

14. The method according to claim 2 and one of claims 8 to 10, **characterized in that** a signal for dust extraction is emitted when the number of dust signals (20a, 20b) in an angular area is higher than a fourth threshold value (32).

15. The method according to claim 2 and one of claims 8 to 10 or claim 2 and claim 14, **characterized in that** a signal for cleaning is emitted when the number of debris signals (25a, 25b, 25c) in an angular area is higher than a fifth threshold value (33).

16. The method according to claim 9 or claim 11 or claim 15, **characterized in that** debris signals (25a, 25b, 25c) with a distance of less than a fourth limiting value (26) are disregarded when determining the number of debris signals (25a, 25b, 25c), wherein the fourth threshold value (26) is preferably greater than ten centimetres.

17. The method according to one of the preceding claims, **characterized in that** the first threshold value (30) is less than one half the number of measuring points of the measurement.

18. The method according to one of the preceding claims, **characterized in that** the first threshold value (30) is less than one third of the number of measuring points of the measurement.

19. A system for the analysis of signals, with a range finder (2) and a processing unit, wherein the range finder (2) is communicatively coupled with the processing unit, wherein the processing unit is provided and configured to carry out a method according to one of the preceding claims.

20. The system according to claim 19, **characterized in that** the range finder (2) is attached to a self-propelled agricultural working machine (1).

## Revendications

1. Procédé d'évaluation de signal des signaux d'un télémètre (2), en particulier d'un télémètre laser,
selon lequel le télémètre (2) présente au moins un point capteur (16),
selon lequel le télémètre (2) réalise des mesures de manière cyclique,
selon lequel le télémètre (2) fournit pour chaque mesure une pluralité de points de mesure (20a, 20b, 22, 25a, 25b, 25c), chaque point de mesure indiquant une distance par rapport au point capteur (16),
selon lequel le télémètre (2) mesure des distances dans une pluralité de directions, et un angle horizontal (24) est associé à chaque point de mesure (20a, 20b, 22, 25a, 25b, 25c),
selon lequel une majorité des points de mesure (20a, 20b, 22, 25a, 25b, 25c) sont distingués en signaux utiles (22) et signaux parasites (20a, 20b, 25a, 25b, 25c), sur la base de la distance,
selon lequel les points de mesure avec une distance inférieure à une première valeur limite (12) sont identifiés en tant que signaux parasites (20a, 20b, 25a, 25b, 25c) et les points de mesure situés au-dessus de la première valeur limite sont identifiés en tant que signaux utiles (22),
selon lequel des signaux utiles (22) sont associés à une première zone de mesure (21a) lorsque les signaux utiles (22) remplissent une condition prédéfinie relative à la distance et à l'angle horizontal (24),
selon lequel le nombre des signaux utiles (22) dans la première zone de mesure (21a) est déterminé et est comparé à une première valeur seuil (30),
selon lequel un signal d'avertissement est émis lorsque le nombre des signaux utiles (22) est inférieur à la première valeur seuil (30).

2. Procédé selon la revendication 1, **caractérisé en ce que** des signaux parasites sont distingués en signaux de poussière (20a, 20b) et signaux de saleté (25a, 25b, 25c), les signaux parasites (20a, 20b, 25a, 25b, 25c) avec une distance inférieure à une deuxième valeur limite (18) étant identifiés en tant que signaux de saleté (25a, 25b, 25c) et les signaux parasites supérieurs à la deuxième valeur limite étant identifiés en tant que signaux de poussière (20a, 20b).

3. Procédé selon l'une des revendications précédentes, **caractérisé en ce que** les signaux utiles (22) supérieurs à une troisième valeur limite ne sont pas pris en compte lors de la détermination du nombre de signaux utiles (22).

4. Procédé selon l'une des revendications précédentes, **caractérisé en ce que** les signaux utiles (22) sont associés à une pluralité de zones de mesure (21a, 21b, 21c), l'association des signaux utiles (22) aux zones de mesure (21a, 21b, 21c) prenant en compte l'angle horizontal (24) et la distance des signaux utiles (22).

5. Procédé selon la revendication 4, **caractérisé en ce qu'**un angle vertical (9) est associé à chaque point de mesure (20a, 20b, 22, 25a, 25b, 25c), l'association des signaux utiles (22) aux zones de mesure (21a, 21b, 21c) prenant en compte l'angle vertical (9).

6. Procédé selon la revendication 5, **caractérisé en ce que** pour chaque signal utile (22) une position constituée de la distance, de l'angle horizontal (24) et de l'angle vertical (9) est convertie en un système de coordonnées cartésiennes, la position dans le système de coordonnées cartésiennes étant projetée sur un plan, et la première zone de mesure (21a) dans le plan étant rectangulaire.

7. Procédé selon la revendication 6, **caractérisé en ce que** pour un premier signal parasite, on calcule une droite définie par l'angle vertical (9), l'angle horizontal (24) et le point capteur (16), et le premier signal parasite (20a, 20b, 25a, 25b, 25c) est associé à la première zone de mesure (21a) lorsque la droite coupe le plan à l'intérieur de la première zone de mesure (21a).

8. Procédé selon l'une des revendications 4 à 6, **caractérisé en ce que** les signaux parasites (20a, 20b, 25a, 25b, 25c) sont associés à une pluralité de plages angulaires (19a, 19b, 19c), l'association des signaux parasites (20a, 20b, 25a, 25b, 25c) aux plages angulaires (19a, 19b, 19c) prenant en compte l'angle horizontal (24) des signaux parasites (20a, 20b, 25a, 25b, 25c).

9. Procédé selon les revendications 2 et 8, **caractérisé en ce que** l'association des signaux de poussière (20a, 20b) aux plages angulaires (19a, 19b, 19c) et/ou l'association des signaux de saleté (25a, 25b, 25c) aux plages angulaires (19a, 19b, 19c) prend en compte l'angle vertical (9).

10. Procédé selon l'une des revendications 8 et 9, **caractérisé en ce qu'**une plage angulaire (19a, 19b, 19c) est associée à chaque zone de mesure (21a, 21b, 21c).

11. Procédé selon les revendications 2 et 7 ou les revendications 2 et 10, **caractérisé en ce que** si, pour une mesure, le nombre de signaux utiles (22) dans la première zone de mesure (21a) est inférieur à la première valeur seuil (30), le nombre des signaux de poussière (20a) et le nombre des signaux de saleté (25a) de la mesure sont comparés dans la plage angulaire (19a) associée, un signal en vue de l'aspiration de poussière étant émis lorsque le nombre de signaux de poussière (20a) est supérieur au nombre de signaux de saleté (25a), et un signal de nettoyage étant émis lorsque le nombre de signaux de saleté (25a) est supérieur au nombre de signaux de poussière (20a).

12. Procédé selon la revendication 2 et l'une des revendications 1 à 10, **caractérisé en ce qu'**un signal en vue de l'aspiration de poussière est émis lorsque le nombre de signaux de poussière (20a, 20b) est supérieur à une deuxième valeur seuil (32).

13. Procédé selon la revendication 2 et l'une des revendications 1 à 10 ou selon la revendication 2 et la revendication 12, **caractérisé en ce qu'**un signal de nettoyage est émis lorsque le nombre de signaux de saleté (25a, 25b, 25c) est supérieur à une troisième valeur seuil (33).

14. Procédé selon la revendication 2 et l'une des revendications 8 à 10, **caractérisé en ce qu'**un signal d'aspiration de poussière est émis lorsque le nombre de signaux de poussière (20a, 20b) dans une plage angulaire est supérieur à une quatrième valeur seuil (32).

15. Procédé selon la revendication 2 et l'une des revendications 8 à 10 ou selon la revendication 2 et la revendication 14, **caractérisé en ce qu'**un signal de nettoyage est émis lorsque le nombre de signaux de saleté (25a, 25b, 25c) dans une plage angulaire est supérieur à une cinquième valeur seuil (33).

16. Procédé selon la revendication 9 ou la revendication 11 ou la revendication 15, **caractérisé en ce que** les signaux de saleté (25a, 25b, 25c) avec une distance inférieure à une quatrième valeur limite (26) ne sont pas pris en compte lors de la détermination du nombre des signaux de saleté (25a, 25b, 25c), la quatrième valeur seuil (26) étant de préférence supérieure à dix centimètres.

17. Procédé selon l'une des revendications précédentes, **caractérisé en ce que** la première valeur seuil (30) est inférieure à la moitié du nombre de points de mesure de la mesure.

18. Procédé selon l'une des revendications précédentes, **caractérisé en ce que** la première valeur seuil (30) est inférieure à un tiers du nombre de points de mesure de la mesure.

19. Système d'évaluation de signal comprenant un télémètre (2) et une unité de calcul, le télémètre (2) étant couplé sur le plan de la communication à l'unité de calcul, l'unité de calcul étant prévue et conçue pour mettre en oeuvre un procédé selon l'une des revendications précédentes.

20. Système selon la revendication 19, **caractérisé en ce que** le télémètre (2) est fixé sur une machine de travail agricole automotrice (1).
